# EUROPEAN PATENT SPECIFICATION

(11) **EP 4 202 307 B1**
(45) Date of publication and mention of the grant of the patent: **25.06.2025**
(21) Application number: 22161672.5
(22) Date of filing: 11.03.2022
(51) Int. Cl.: F23R 3/28

(54) **COMBUSTOR WITH A FUEL INJECTOR**
BRENNKAMMER MIT EINEM KRAFTSTOFFINJEKTOR
CHAMBRE DE COMBUSTION DOTÉE D'UN INJECTEUR DE CARBURANT

(30) Priority: 21.12.2021 US 202163292227 P; 22.02.2022 US 202217677165
(43) Date of publication of application: 28.06.2023
(73) Proprietor: General Electric Company, Evendale, OH 45215 (US)
(72) Inventor: HAN, Fei, Schenectady, 12345 (US); SAMARASINGHE, Ramal Janith, Schenectady, 12345 (US); NAIK, Pradeep, Schenectady, 12345 (US); VENKATESAN, Krishnakumar, Schenectady, 12345 (US); BUCARO, Michel, Schenectady, 12345 (US); PATRA, Ajoy, Schenectady, 12345 (US); GIRIDHARAN, Manampathy, Schenectady, 12345 (US)
(74) Representative: Openshaw & Co.

(56) References cited:
- EP-A1- 4 187 154
- DE-A1- 102004 009 226
- GB-A- 2 345 957
- US-A1- 2006 191 268
- US-A1- 2010 089 065
- US-A1- 2013 019 602
- US-A1- 2016 040 881
- US-A1- 2017 298 875

## Description

### TECHNICAL FIELD

The disclosure generally relates to a combustor for a turbine engine, specifically to a fuel injector for the combustor.

### BACKGROUND

A gas turbine engine includes a turbine that is driven by combustion of a combustible fuel within a combustor of the engine. A turbine engine utilizes a fuel injector assembly to inject the combustible fuel into the combustor. The fuel injector assembly can mix the fuel with air prior to injection in order to achieve efficient combustion.

A prior art gas turbine engine is disclosed in DE 10 2004 009226, wherein a combustion chamber for a gas turbine system is described with at least one premix burner which has a burner outlet for supplying a fuel-oxidant mixture into the combustion chamber and at least one gas-permeable perforated section in a wall of the combustion chamber and / or a front plate of the premix burner. The premix burner is in fluid communication with a means for supplying a combustible gas or gas mixture to the combustion chamber.

A prior art fuel injector for a combustion engine is disclosed in US 2017/298875, wherein the fuel injector for a combustion engine includes an injector head including a nozzle, a premixer, and a distributor structured to distribute a plurality of different fuels to different sets of fueling orifices in the premixer. A pilot assembly of the fuel injector is coupled to the premixer and includes a first fueling passage for a first fuel and a second fueling passage for a second fuel. Multiple sets of fueling orifices are positioned within the fuel injector, the fueling orifice sets being selectively connectable to a plurality of different fuel supplies, and both located and sized so as to accommodate a wide range of flow rates to enable a combustion engine coupled with the fuel injector to operate on fuels having a range of Wobbe indices and compositions.

A prior art fuel delivery system for a gas turbine engine is disclosed in US 2010/089065, wherein the fuel delivery system for a turbine engine has at least one fuel injector having an upstream orifice arrangement that produces a first pressure drop of flowing fuel and a downstream orifice arrangement that produces a second pressure drop of the flowing fuel. The upstream orifice arrangement or the downstream orifice arrangement includes a noncylindrical orifice.
A prior art turbine engine is disclosed in GB 2 345 957 A, wherein a combustor comprises a fuel injector provided with a gas flow restrictor.

According to the present invention there is provided a turbine engine as defined in the appended independent apparatus claim. Further preferable features of the turbine engine of the present invention are defined in the appended dependent apparatus claims.

### BRIEF DESCRIPTION OF THE DRAWINGS

A full and enabling disclosure, including the best mode thereof, directed to one of ordinary skill in the art, is set forth in the specification, which makes reference to the appended figures in which:
FIG. 1 is a schematic cross-sectional diagram of a turbine engine for an aircraft, the turbine engine including a combustion section.
FIG. 2 is a schematic cross-sectional side view of a portion of a generic combustor suitable for use in the turbine engine of FIG. 1, further illustrating a fuel injector.
FIG. 3 is a cross-sectional side view of a fuel injector suitable for use as the fuel injector of FIG. 2, further comprising a fuel channel and a flow restrictor having a set of fuel orifices, the flow restrictor being located within an upstream portion of the fuel channel.
FIG. 4 is a cross-sectional side view of an exemplary fuel injector suitable for use as the fuel injector of FIG. 2, further comprising an exemplary flow restrictor having a set of fuel orifices and an inner fuel channel.
FIG. 5 is a cross-sectional side view of an exemplary fuel injector suitable for use as the fuel injector of FIG. 2, the exemplary fuel injector further comprising a first fluid circuit and a second fluid circuit, and an exemplary flow restrictor having a set of fuel orifices and an inner fuel channel fluidly coupled to the first fluid circuit.

### DETAILED DESCRIPTION

Aspects of the disclosure described herein are generally directed to a combustion section for a turbine engine. The combustion section including a fuel injector defining a fuel inlet for the combustion section. The fuel injector having at least one fuel channel fluidly coupled to a fuel circuit. A flow restrictor can be provided within the fuel channel and includes a set of fuel orifices. The fuel within the fuel injector can be any suitable fuel. As a non-limiting example, the fuel can contain hydrogen (hereinafter, hydrogen-containing fuel) that is mixed with at least one airflow within a fuel-air mixing assembly downstream of the fuel injector. Hydrogen-containing fuel typically has a wider flammable range and a faster burning velocity than traditional fuels, such as petroleum-based fuels or petroleum and synthetic fuel blends. The burn temperatures for hydrogen-containing fuel can be higher than the burn temperatures of traditional fuel, such that existing engine designs for traditional fuels would not be capable of operating under the heightened temperatures. The fuel injector, as described herein, provides for a fuel injector with stages that restrict the flow of fuel through the fuel channel (e.g., the flow restrictor). This, in turn, can affect the volume and coverage of the hydrogen-containing fuel as the fuel enters the fuel-air mixing assembly.

For purposes of illustration, the present disclosure will be described with respect to the turbine for an aircraft turbine engine. It will be understood, however, that aspects of the disclosure described herein are not so limited and may have general applicability within an engine, including compressors, power generation turbines, as well as in non-aircraft applications, such as other mobile applications and non-mobile industrial, commercial, and residential applications.

Reference will now be made in detail to the combustor architecture, and in particular the fuel injector and swirler for providing fuel to the combustor located within a turbine engine, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

The singular forms "a", "an", and "the" include plural references unless the context clearly dictates otherwise. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are used only for identification purposes to aid the reader's understanding of the present disclosure, and should not be construed as limiting, particularly as to the position, orientation, or use of aspects of the disclosure described herein. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary. The singular forms "a", "an", and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

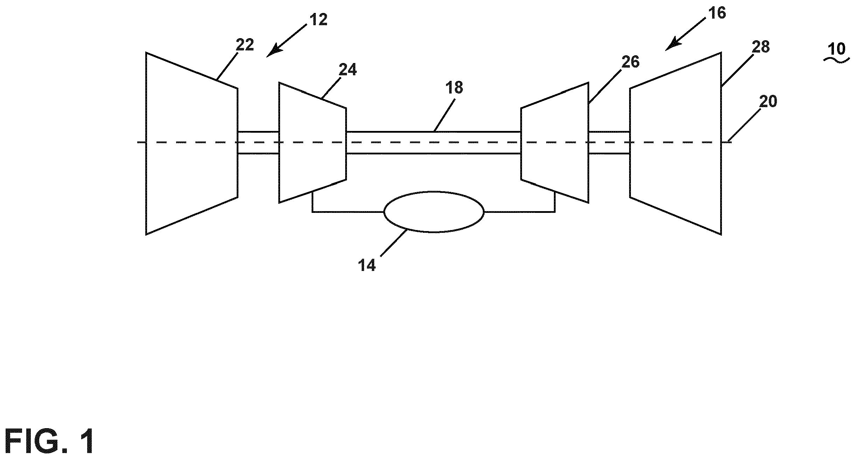

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor and turbine sections 12, 16, such that rotation of one affects the rotation of the other, and defines a rotational axis 20 for the turbine engine 10.

The compressor section 12 can include a low-pressure (LP) compressor 22, and a high-pressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of stages. Further, it is contemplated, that there can be any other number of components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

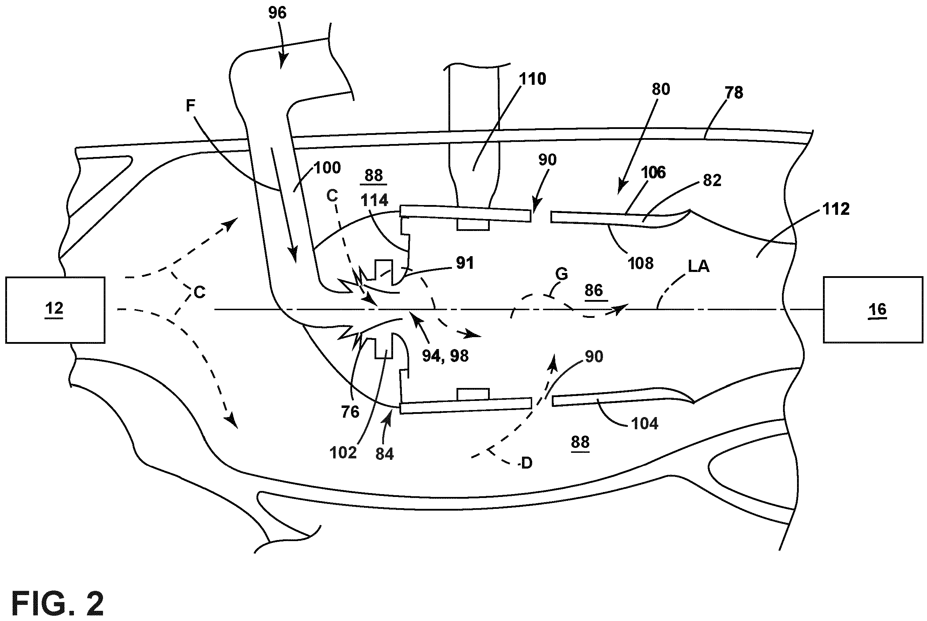

FIG. 2 depicts a schematic cross-sectional view of a generic combustion section suitable for use as combustion section 14 located between a compressor section 12 and a turbine section 16 of a turbine engine. The combustion section 14 can include an annular arrangement of fuel injectors 76 each connected to a combustor 80. It should be appreciated that the annular arrangement of fuel injectors 76 can be one or multiple fuel injectors, which can each have different characteristics. Only a single fuel injector of the annular arrangement of fuel injectors 76 is illustrated is for illustrative purposes only and is not intended to be limiting. The combustor 80 can have a can, can-annular, or annular arrangement depending on the type of turbine engine in which the combustor 80 is located. In a non-limiting example, an annular arrangement is illustrated and disposed within a casing 78. The combustor 80 can include an annular combustor liner 82, a dome assembly 84 including a dome wall 114 which together define a combustion chamber 86 about a longitudinal axis (LA). A compressed air passageway 88 can be defined at least in part by both annular combustor liner 82 and the casing 78. The fuel injector of the annular arrangement of fuel injectors 76 is fluidly coupled to the combustion chamber 86. A passage can fluidly connect the compressed air passageway 88 and the combustor 80. The passage can be defined by at least one set of dilution openings 90 located in the annular combustor liner 82.

The fuel injector of the annular arrangement of fuel injectors 76 can be coupled to and disposed within the dome assembly 84 upstream of a flare cone 91 to define a fuel outlet 94. The fuel injector of the annular arrangement of fuel injectors 76 can include a fuel inlet 96 that can be adapted to receive a flow of a fuel (F) (e.g., a hydrogen-containing fuel) and a linear fuel passageway 100 extending between the fuel inlet 96 and the fuel outlet 94. A swirler 102 can be provided at a dome inlet 98 to swirl incoming air in proximity to fuel (F) exiting the fuel injector of the annular arrangement of fuel injectors 76 and provide a homogeneous mixture of air and fuel entering the combustor 80.

The annular combustor liner 82 can be defined by a wall 104 having an outer surface 106 and an inner surface 108 at least partially defining the combustion chamber 86. The wall 104 can be made of one continuous monolithic portion or be multiple monolithic portions assembled together to define the annular combustor liner 82. By way of non-limiting example, the outer surface 106 can define a first piece of the wall 104 while the inner surface 108 can define a second piece of the wall 104 that when assembled together form the annular combustor liner 82. As described herein, the wall 104 includes the at least one set of dilution openings 90. It is further contemplated that the annular combustor liner 82 can be any type of annular combustor liner 82, including but not limited to a double walled liner or a tile liner. An igniter 110 can be provided at the wall 104 and fluidly coupled to the combustion chamber 86.

During operation, compressed air (C) can flow from the compressor section 12 to the combustor 80 through the compressed air passageway 88. The at least one set of dilution openings 90 in the annular combustor liner 82 allow passage of at least a portion of the compressed air (C), the portion defining a dilution airflow (D), from the compressed air passageway 88 to the combustion chamber 86.

Some compressed air (C) can be mixed with the fuel (F) from the fuel injector of the annular arrangement of fuel injectors 76 and upon entering the combustor 80 are ignited within the combustion chamber 86 by one or more igniters 110 to generate combustion gas (G). The combustion gas (G) is mixed using the dilution airflow (D) supplied through the at least one set of dilution openings 90, and mixes within the combustion chamber 86, after which the combustion gas (G) flows through a combustor outlet 112 and exits into the turbine section 16.

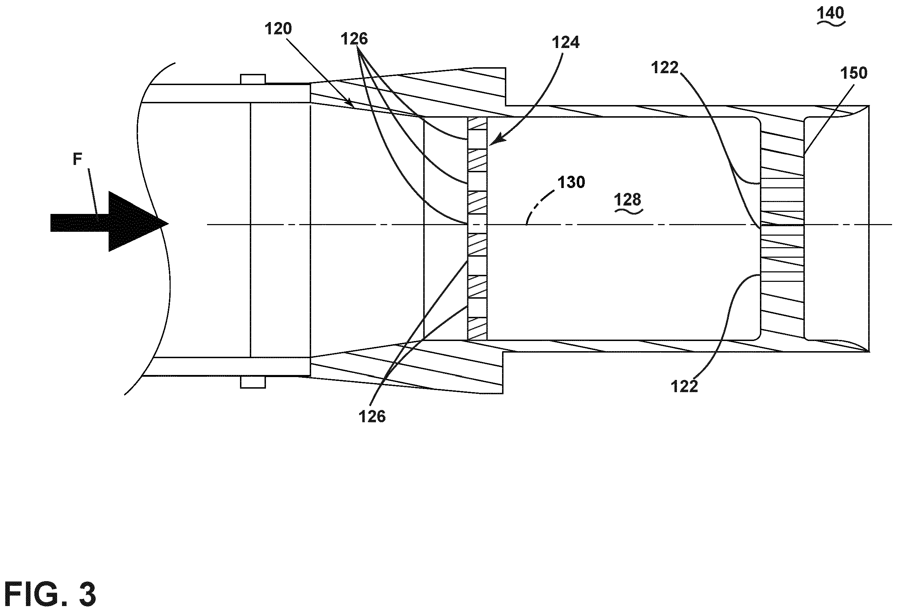

FIG. 3 is a cross-sectional side view of a fuel injector 140 suitable for use as at least one of the fuel injectors of the annular array of fuel injectors 76 of FIG. 2. The fuel injector 140 can include a fuel channel 120 configured to receive the flow of the fuel (F) from the fuel inlet 96 (FIG. 2). The fuel injector 140 can include a wall 150 provided along a distal end of the fuel injector 140. A first set of fuel orifices 122 can be provided along and extend through at least a portion of the wall 150 and define an outlet of the fuel injector 140 for the fuel (F) from the fuel injector 140.

A flow restrictor 124 can be provided within a portion of the fuel channel 120. As a non-limiting example, the flow restrictor 124 can be provided upstream of the first set of fuel orifices 122. The flow restrictor 124 can span the entire fuel channel 120 and oppose the flow of the fuel (F). In other words, the flow restrictor 124 can act as an impedance or restriction point of the flow of fuel (F) within the flow restrictor 124. In order for the fuel (F) to flow out of the first set of fuel orifices 122, the fuel (F) must first flow through the flow restrictor 124. The flow restrictor 124 can include a second set of fuel orifices 126 within the flow restrictor 124. As a non-limiting example, both the flow restrictor 124 and the portion of the fuel channel 120 that the flow restrictor 124 is provided within can be circular. As such, the flow restrictor 124 can be a circumferential flow restrictor. The second set of fuel orifices 126 can be circumferentially and radially spaced throughout the flow restrictor 124 and extend axially through the entire flow restrictor 124 with respect to a centerline axis 130 of the flow restrictor 124. In other words, the second set of fuel orifices 126 can form multiple radially-spaced rows of circumferentially-spaced orifices. Alternatively, the flow restrictor 124 can be any suitable shape that corresponds to the portion of the fuel injector 140 that the flow restrictor 124 is provided within. As such, the flow restrictor 124 and the fuel injector 140 can take any suitable shape. As a non-limiting example, the fuel injector 140 can include a venturi with the flow restrictor 124 provided within the venturi. The flow restrictor 124 can increase or decrease in cross-sectional area to conform to the shape of the venturi. Similarly, the first set of fuel orifices 122 can be circumferentially or radially spaced with respect to one another. It will be appreciated that each orifice of the first set of fuel orifices 122 and the second set of fuel orifices 126 can be sized or shaped any suitable size or shape. Further, there can be any number of one or more orifices of the first set of fuel orifices 122 and one or more orifices of the second set of fuel orifices 126.

The flow restrictor 124 can span across the fuel channel 120 in any suitable direction. As a non-limiting example, the flow restrictor 124 can extend perpendicularly, as illustrated, or non-perpendicularly across the fuel channel 120 with respect to the centerline axis 130. Further, the flow restrictor 124 can have any suitable length between radially opposing walls of the fuel channel 120. As a non-limiting example, the length of the flow restrictor 124 can be equal to a diameter of the fuel channel 120. Alternatively, the length of the flow restrictor 124 can be non-equal to the diameter of the fuel channel 120. The flow restrictor 124 can have any suitable shape, size or form. As a non-limiting example, the flow restrictor 124 can be a planar flow restrictor that extends linearly across the fuel channel 120 when viewed from a plane parallel to the centerline axis 130 and intersecting the flow restrictor 124. Alternatively, the flow restrictor 124 can be a non-planar flow restrictor that extends non-linearly across the fuel channel 120 when viewed from a plane parallel to the centerline axis 130 and intersecting the flow restrictor 124 (e.g., the flow restrictor 124 can be formed as an undulating wave). It will be further appreciated that the flow restrictor 124 can be symmetric or non-symmetric about a plane parallel to the centerline axis 130 and intersecting the flow restrictor 124.

During operation, the flow of the fuel (F) can flow through the second set of fuel orifices 126, into a cavity 128, and through the first set of fuel orifices 122. The fuel (F) can then flow into the combustor 80 (FIG. 2) . When entering the combustor 80, the fuel (F) can mix with a flow of air (e.g., the compressed air (C)). The fuel (F) and the flow of air can each include acoustic oscillations (e.g., the acoustic oscillations of the hydrogen-containing fuel), which can interact with one another to generate combustion dynamics. As used herein, the term "combustion dynamics" or iterations thereof, can refer to the generation of acoustic pressure oscillations that occur within the combustor. As a non-limiting example, acoustic pressure oscillations can occur within the fuel injector 140 or the fuel inlet 96 (FIG. 2), which can increase or compound with combustion dynamics within the combustor 80. It is contemplated that the mitigation, elimination, or control of the combustion dynamics can result in a greater efficiency or longer life cycle of the turbine engine 10.

As the fuel (F) flows through the fuel injector 140, two stages of pressure drops of the fuel (F) can be experienced. The first pressure drop being across the second set of fuel orifices 126, the second pressure drop being across the first set of fuel orifices 122. In other words, the fuel (F) can have a first pressure upstream of the second set of fuel orifices 126, a second pressure downstream of the second set of fuel orifices 126 and within the cavity 128, and a third pressure downstream of the first set of fuel orifices 122. The pressure change from the first pressure to the second pressure can define the first pressure drop, while the pressure change from the second pressure to the third pressure can define the second pressure drop. As a non-limiting example, the second pressure drop across the second set of fuel orifices 126 can be larger than the first pressure drop across the first set of fuel orifices 122 such that combustion dynamics occurring in the combustion chamber 86 can propagate upstream of the first set of fuel orifices 122 and into the cavity 128, but not through the flow restrictor 124. In other words, the two pressure drops can be used to locate or isolate combustion dynamics in the fuel injector 140 or the fuel inlet that the fuel injector is a coupled to (e.g., the fuel inlet 96 of FIG. 2) from the combustion dynamics within the combustion chamber downstream of the fuel injector 140. This ultimately reduces or otherwise controls the overall combustion dynamics of the combustion section.

The acoustic oscillations of the fuel (F) can be at least partially dependent on acoustic impedance of the fuel injector 140, which is a function of the two pressure drops and the volume of the cavity 128. As a non-limiting example, the acoustic impedance can be controlled by changing the location, number, sizing, or formation of the second set of fuel orifices 126 or the first set of fuel orifices 122, or by changing a volume of the cavity 128. As a non-limiting example, the axial length, with respect to the centerline axis 130, or volume of the cavity 128 can be sized with respect to the acoustic oscillation of the fuel (F), such that the acoustic oscillation of the fuel (F) within the cavity 128 and downstream of the first set of fuel orifices 122 can offset or counteract the acoustic pressure oscillations of the compressed air (C), which can ultimately reduce or otherwise control the overall combustion dynamics in the combustion chamber 86 (FIG. 2). As a non-limiting example, the axial length of the cavity 128 can be a quarter of the wavelength of the acoustic oscillation of the fuel (F). As such, the fuel injector 140 can be further defined as an acoustic resonator that can be used to mitigate combustion dynamics within the combustion chamber and the fuel injector 140.

Further, the fuel injector 140 can be used to distribute the fuel (F) in a desired fashion before the fuel (F) enters the combustion chamber 86. As a non-limiting example, the geometric configuration of the flow restrictor 124 (e.g., the number, position, and sizing of the second set of fuel orifices 126) and the positioning of the first set of fuel orifices 122 can be used to generate a profile of the fuel (F) as the fuel (F) enters the combustion chamber 86. The profile of the fuel (F) can determine a shape of the flame or flame shape after the fuel (F) is mixed with the compressed air (C) and ignited within the combustor 80. The flame shape can directly affect the combustor exit velocity and temperature profile of the combustion gases exiting the combustion chamber 86 (e.g., after combustion has occurred) , the pollutant emissions, and the combustion dynamics within the combustor 80.

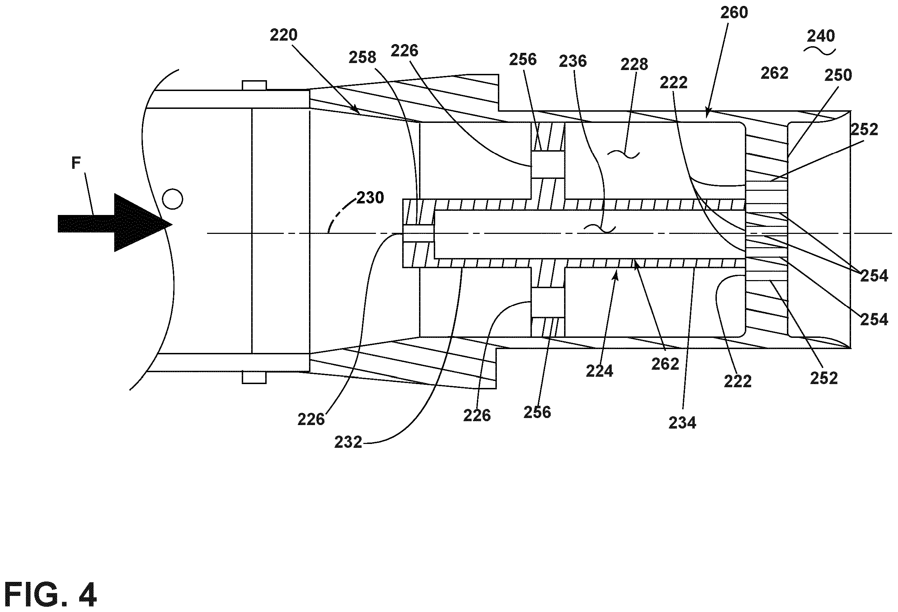

FIG. 4 is a cross-sectional side view of a fuel injector 240 for use in a turbine engine in accordance with the claims and which is suitable for use as at least one of the fuel injectors of the annular array of fuel injectors 76 of FIG. 2. The fuel injector 240 is similar to the fuel injector 140, therefore, like parts will be identified with like numerals increased to the 200 series, with it being understood that the description of the like parts of the fuel injector 140 applies to the fuel injector 240 unless otherwise noted.

The fuel injector 240 includes a first fuel channel 220 that terminates at a distal end of the fuel injector 240 defined by a wall 250. The first fuel channel 220 is configured to receive the fuel (F). A first set of fuel orifices 222 can be provided within and extend through the wall 250 to define an outlet of the fuel injector 240. A flow restrictor 224 can be provided within the first fuel channel 220 upstream of the first set of fuel orifices 222 and be defined by a centerline axis 230. The flow restrictor 224 can include a second set of fuel orifices 226 fluidly coupled to the fuel (F), with at least a portion of the second set of fuel orifices 226 being directly fluidly coupled to a cavity 228.

The flow restrictor 224 is similar to the flow restrictor 124, except, the flow restrictor 224 is not formed as a planar flow restrictor with respect to a plane normal to the centerline axis 230 and intersecting the flow restrictor 224. The flow restrictor 224 instead includes a first portion including a first subset 256 of the second set of fuel orifices 226, and a second portion including a second subset 258 of the second set of fuel orifices 226. The second portion can extend axially outwardly, in a first direction, from a plane normal to the centerline axis 230 and intersecting the first portion. The second portion can define a first protrusion 232. The flow restrictor 224 can further include a third portion extending axially outwardly from the plane in a second direction, opposite the first direction, to define a second protrusion 234. The second protrusion 234 can confront, contact, be coupled to, or integrally formed with a portion of the fuel injector 240 including the first set of fuel orifices 222. A second fuel channel 236 can be formed by the first protrusion 232 and the second protrusion 234 and extend axially through the flow restrictor 224. As such, a first subset 252 of the first set of fuel orifices 222 can be fluidly coupled to the first fuel channel 220, while a second subset 254, different from the first subset 252, of the first set of fuel orifices 222 can be fluidly coupled to the second fuel channel 236. The cavity 228 and the second fuel channel 236 can form concentric circles or any other suitable shape where the cavity 228 envelopes the second fuel channel 236 when viewed in a plane normal to centerline axis 230 and intersecting the cavity 228 and the second fuel channel 236. As a non-limiting example, an axial length of the second fuel channel 236 can be larger than the axial length of the cavity 228. It will be appreciated, however, that the axial length of the second fuel channel 236 can be smaller than the axial length of the cavity 228. As such, the first protrusion 232 can be formed as a recess within the flow restrictor 224 such that the fuel orifices of the second set of fuel orifices 226 provided on the first protrusion 232 are downstream of the remaining fuel orifices of the second set of fuel orifices 226.

The fuel injector 240 can be defined by a first segment 260 and a second segment 262 that together define the fuel channel of the fuel injector 240 (e.g., the combination of the first fuel channel 220 and the second fuel channel 236). The first segment 260 can be defined by the space between the first set of fuel orifices 222 and the second set of fuel orifices 226 fluidly coupled to the cavity 228. The second segment 262 can be defined by the space between the first set of fuel orifices 222 and the fuel orifice of the second set of fuel orifices 226 fluidly coupled to the second fuel channel 236. The first segment 260 can envelope or at least partially surround the second segment 262. As a non-limiting example, the fuel injector 240 can be a tubular fuel injector such that the first segment 260 circumscribes the second segment 262 when viewed along a plane normal to the centerline axis 230 and intersecting the first segment 260 and the second segment 262. An outlet of the first segment 260 can be defined by the first subset 252 of the first set of fuel orifices 222. An inlet of the first segment 260 can be defined by the first subset 256 of the second set of fuel orifices 226. An outlet of the second segment 262 can be defined by the second subset 254 of the first set of fuel orifices 222. An inlet of the second segment 262 can be defined by the second subset 258, different from the first subset 256, of the second set of fuel orifices 226. The inlet of the first segment 260 can be spaced from the inlet of the second segment 262. The fuel orifices that define the outlets and inlets of the first segment 260 and the second segment 262 can be varying sizes or shapes, or the same size or shape with respect to one another. The volume or axial length with respect to the centerline axis 230 of the first segment 260 and the second segment 262 can be sized to mitigate the combustion dynamics within the fuel injector 240. Although two segments are illustrated, it will be appreciated that the flow restrictor 224 can partition the fuel injector 240 into any number of concentric or non-concentric segments.

The second set of fuel orifices 226, similar to the second set of fuel orifices 126 of FIG. 3, can be circumferentially and radially spaced about the flow restrictor 224. The second set of fuel orifices 226, however, can further be axially spaced about the flow restrictor 224. As illustrated, at least a portion of the second set of fuel orifices 226 can be provided on a forward or upstream portion of the first protrusion 232, while the remaining orifices of the second set of fuel orifices 226 can be provided on a portion of the flow restrictor 224 downstream of the first protrusion 232. The fuel orifices of the second set of fuel orifices 226 that are provided on the first protrusion 232 can be directly fluidly coupled to the second fuel channel 236, while the remaining orifices of the second set of fuel orifices 226 can be directly fluidly coupled to the cavity 228.

Each orifice of the second set of fuel orifices 226 can be defined by a cross-sectional area with respect to a plane normal to the centerline axis 230 and intersecting the respective fuel orifice of the second set of fuel orifices 226. As illustrated, the fuel orifices of the second set of fuel orifices 226 provided on the first protrusion 232 can be defined by a first cross-sectional area, while the cross-sectional area of the fuel orifices of the second set of fuel orifices 226 downstream of the first protrusion 232 can be defined by a second cross-sectional area, which can be different from the first cross-sectional area. In other words, the fuel orifices of the second set of fuel orifices 226 provided on the first protrusion 232 can be different from the remaining fuel orifices of the second set of fuel orifices 226. As a non-limiting example, each cross-sectional area can be equal. The sizing of each of the second set of fuel orifices 226 can be used to control the mass flow rates of the fuel (F) within the cavity 228 and the second fuel channel 236. As a non-limiting example, a smaller cross-sectional area will result in a smaller fuel flow rate. As illustrated, the fuel (F) within the cavity 228 would have a larger flow rate than the fuel (F) within the second fuel channel 236.

The first set of fuel orifices 222 can be positioned to correspond to one of either the cavity 228 or the second fuel channel 236. As a non-limiting example, any number of one more fuel orifices of the first set of fuel orifices 222 can be directly fluidly coupled to the cavity 228 while the remaining fuel orifices of the first set of fuel orifices 222 can be directly fluidly coupled to the second fuel channel 236. The sizing or placement of the second set of fuel orifices 226 and the positioning and sizing of the first set of fuel orifices 222 can be used to change the fuel flow rates in the second fuel channel 236 and the cavity 228, and therefore change the profile of the fuel (F) as the fuel (F) exits the first set of fuel orifices 222 and flows into the combustor 80.

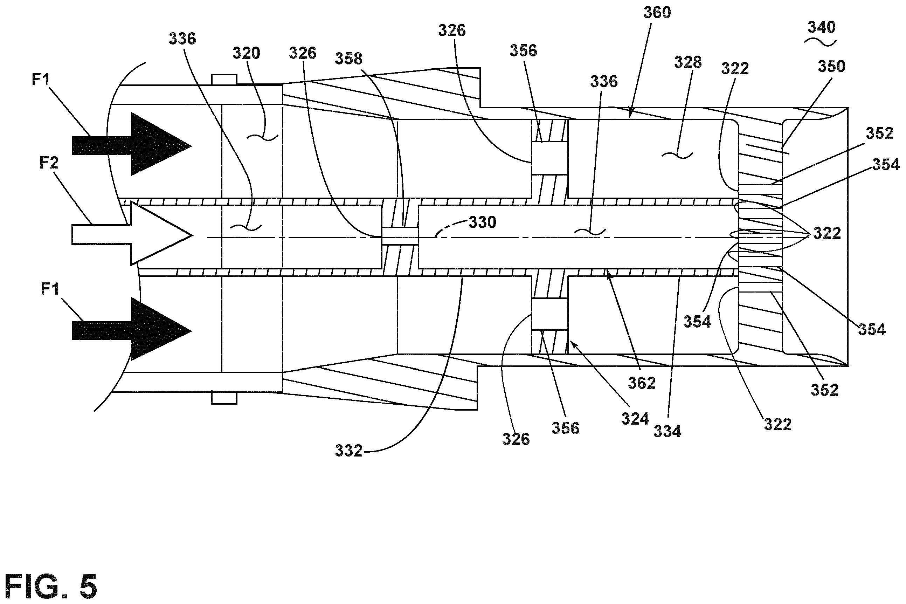

FIG. 5 is a cross-sectional side view of a fuel injector 340 for use in a turbine engine in accordance with the claims and which is suitable for use as at least one of the annular array of fuel injectors 76 of FIG. 2. The fuel injector 340 is similar to the fuel injectors 140, 240, therefore, like parts will be identified with like numerals increased to the 300 series, with it being understood that the description of the like parts of the fuel injector 140, 240 applies to the fuel injector 340 unless otherwise noted.

The fuel injector 340 can included a wall 350 provided along a distal end of the fuel injector 340. The fuel injector 340 includes a first set of fuel orifices 322 that can be provided along and extend through at least a portion of the wall 350 to define an outlet of the fuel injector 340. A flow restrictor 324 can be provided within the fuel injector 340 upstream of the first set of fuel orifices 322 and be defined by a centerline axis 330. The flow restrictor 324 can include a second set of fuel orifices 326, with at least a portion of the second set of fuel orifices 326 being directly fluidly coupled to a cavity 328.

The fuel injector 340 is similar to the fuel injector 140, 240, except that the fuel injector 340 is fluidly coupled to a flow of a first fuel (F1) from a first fluid circuit, and a flow of a second fuel (F2) from a second fluid circuit. The first fuel (F1) and the second fuel (F2) can each contain a hydrogen-containing fuel having a respective percentage of hydrogen. The percent hydrogen of the first fuel (F1) can be equal to or non-equal to the percent hydrogen of the second fuel (F2). The difference between the first fuel (F1) and the second fuel (F2) can be the chemical makeup of the fluid flow or a pressure, volume, or velocity of the fluid flow. As a non-limiting example, the first fuel (F1) can contain between 0% and 100% of hydrogen. As a non-limiting example, the second fuel (F2) can contain between 0% and 100% hydrogen. As a non-limiting example, the first fuel (F1) can contain 50% hydrogen and 50% other fuel, while the second fuel (F2) can contain 100% hydrogen. As a non-limiting example, both the first fuel (F1) and the second fuel (F2) can contain 100% hydrogen. Alternatively, the first fuel (F1) and the second fuel (F2) can be identical fuels, with differing or equal mass flow rate, pressure, volume, or velocity. It is contemplated that one of the first fuel (F1) or the second fuel (F2) can contain a non-hydrogen-containing fuel. It will be appreciated that the fuel injector 340 can be fluidly coupled to any number of one or more fluid circuits containing any sustainable fuel.

The fuel injector 340 can be split into a first fuel channel 320 and a second fuel channel 336. The first fuel channel 320 can be fluidly coupled to the first fuel (F1), while the second fuel channel 336 can be fluidly coupled to the second fuel (F2). It will be appreciated that the fuel injector 340 can be split into any number of one or more fuel channels. As a non-limiting example, the number of fuel channels can correspond to the number of fuel circuits that the fuel injector 340 is fluidly coupled to.

The flow restrictor 324 can be similar to the flow restrictor 224 of FIG 4 in that the flow restrictor 324 includes a first portion, a second portion defining a first protrusion 332 and a third portion defining a second protrusion 334, which together define at least a portion of the second fuel channel 336. As illustrated, the first protrusion 332 can extend axially through the fuel injector 340. It is contemplated that the first protrusion 332 can further define a hose or conduit that is directly fluidly coupled to a portion of the second fuel circuit containing the second fuel (F2). The second set of fuel orifices 326, like the second set of fuel orifices 226 (FIG. 4), can be axially, radially, and circumferentially spaced about the flow restrictor 324 with respect to the centerline axis 330. An axially forward or upstream fuel orifice(s) of the second set of fuel orifices 326 can be provided within a portion of the second fuel channel 336, while the remaining fuel orifice(s) can be provided within the first fuel channel 320. The portion of the first fuel channel 320 downstream of the second set of fuel orifices 326 within the first fuel channel 320 can define a cavity 328. Similar to the second set of fuel orifices 226 (FIG. 4), the second set of fuel orifices 326 can be varied in shape, size, or cross-sectional area to affect the profile of the fluid flow that flows through the respective fuel orifices 326. Similar to the second set of fuel orifices 226 (FIG. 4), the second set of fuel orifices 326 can be varied in placement with respect to the cavity 328 and the second fuel channel 336. Similar to the flow restrictor 224 (FIG. 4), the flow restrictor 324 include a first segment 360 and a second segment 362, with the first segment 360 circumscribing the second segment 362. The first segment 360 can extend between a first subset 352 of the first set of fuel orifices 322 and a first subset 356 of the second set of fuel orifices 326. The second segment 362 can extend between a second subset 354, different from the first subset 352, of the first set of fuel orifices 322 and a second subset 358, different from the first subset 356, of the second set of fuel orifices 326.

Further, the variation of the pressure, volume, or velocity of the first fuel (F1) with respect to the second fuel (F2), the placement of the first set of fuel orifices 322, or the second set of fuel orifices 326 can be used to further control the profile of the fluid flow (e.g., combined fluid flow of the first fuel (F1) and the second fuel (F2)) that flows out of the fuel injector 340 and into the combustor 80 (FIG. 2).

Benefits associated with the disclosure as described herein include an improvement to the fuel profile, flame shape, combustor exit temperature profile, pollutant emissions, and combustion dynamics within the combustor when compared to a conventional combustor. For example, conventional combustors can include a fuel injector with a fuel channel that feeds to a set of orifices that define an outlet of the fuel injector. In the conventional fuel injector, there is nothing between the inlet of the fuel and the set of orifices. This, in turn, creates a large pressure differential between a portion of the fuel injector upstream of the set of orifices and downstream the set of orifices. This, in turn, results in a non-controlled profile of the fuel exiting the fuel injector and ultimately a non-controlled flame shape. This results in uncontrolled and undesirable combustion dynamics, which can ultimately reduce the overall efficiency or lifespan of the turbine engine including a conventional combustor. The fuel injector as described herein, however, includes the flow restrictor with the set of fuel orifices, and the creation of the cavity or the concentric segments, which can all be used to adjust or otherwise control the profile of the fuel exiting the first set of fuel orifices, and control the combustion dynamics within the combustion chamber. The variation of the profile, as discussed herein, can ultimately control the flame shape, which can ultimately control the combustion dynamics within the combustor. Further, the axial length or volume of the cavity or the segments can be sized with respect to the acoustic oscillation of the flow of the fuel within the fuel injector, such that the acoustic oscillation of the fuel within the cavity or the segments and downstream of the first set of fuel orifices can offset or counteract the acoustic pressure oscillation of the air flow oscillations in the combustor, and ultimately reduce the combustion dynamics in the combustion chamber. The control, mitigation, or counteraction of the combustion dynamics can ultimately result in a turbine engine with a higher efficiency when compared to a conventional turbine engine including a conventional combustor. Further, the controlled flame shape can also impact combustion pollutant emissions and the combustor exit temperature profile, which can result in an eco-friendlier and more efficient turbine engine, respectively, when compared to a conventional turbine engine.

Further benefits of the present disclosure include a combustor with a fuel injector containing a flow of fuel with a hydrogen-containing fuel. Hydrogen-containing fuels have a higher flame temperature than traditional fuels (e.g., fuels not containing hydrogen). That is, hydrogen or a hydrogen mixed fuel typically has a wider flammable range and a faster burning velocity than traditional fuels such petroleum-based fuels, or petroleum and synthetic fuel blends. Further, the hydrogen within the hydrogen-containing fuel is a compressible gas. As such, the fuel can oscillate and interact with the combustion dynamics of the combustor. This, in turn, can increase the overall combustion dynamics of the combustor. Therefore, the many of the combustion components designed for traditional fuels would not be suitable for hydrogen or hydrogen mixed fuels. The fuel injector, as described herein, however, can be used in instances where hydrogen-containing fuels are used. The fuel injector includes the flow restrictor, the cavity, and the first set of fuel orifices. When the fuel flows against the flow restrictor and through the second set of fuel orifices, the fuel has a first pressure upstream of the flow restrictor and a second pressure downstream of the flow restrictor (e.g., within the cavity), thus defining a first pressure drop. The fuel within the cavity and at the second pressure can then flow through the first set of fuel orifices, where the fuel is then at a third pressure downstream of the first set of fuel orifices, thus defining a second pressure drop. The first pressure drop is larger than the second pressure drop. The two stages or pressure drops, in turn, results in a relatively small pressure drop is experienced across the second set of fuel orifices when compared to a conventional fuel injector that does not include the flow restrictor (e.g., only a single set of orifices defining the outlet of the fuel injector).. The pressure drop across the flow restrictor upstream of the first set of fuel orifices, the pressure drop across the first set of fuel orifices, and the inclusion of the segments or cavity can be used to create fuel flow oscillations that will cancel or counteract the air flow oscillations in the combustor, resulting in reduced overall combustion dynamics of the combustor, which in turn can increase the lifespan and efficiency of the turbine engine when compared to a conventional turbine engine using traditional fuels.

To the extent not already described, the different features and structures of the various aspects can be used in combination, or in substitution with each other as desired. That one feature is not illustrated in all of the examples is not meant to be construed that it cannot be so illustrated, but is done for brevity of description. Thus, the various features of the different aspects can be mixed and matched as desired to form new aspects, whether or not the new aspects are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A turbine engine (10) comprising:
a compressor section (12), a combustion section (14), and a turbine section (16) in serial flow arrangement; and
a combustor (80), provided within the combustion section (14), the combustor comprising:
a dome wall and a combustor liner collectively forming a combustion chamber (86) and a plurality of fuel injectors (240, 340) extending through a respective portion of the dome wall, the fuel injectors (240, 340) provided in an annular arrangement, the fuel injectors comprising:
a fuel channel (220, 320, 236, 336), wherein the fuel channel defines a centerline axis, terminates at a distal end, and is fluidly coupled to a fuel (F, F1, F2);
a wall (250, 350) provided within the fuel channel, the wall including a first set of fuel orifices (222, 322) extending therethrough and fluidly coupling the fuel channel (220, 320, 236, 336) to the combustion chamber (86); and
a flow restrictor (224, 324) located within the fuel channel (220, 320, 236, 336), upstream of and spaced from the first set of fuel orifices (222, 322), and having a second set of fuel orifices (226, 326) fluidly coupled to the first set of fuel orifices (222, 322);
wherein a diameter of the fuel channel (220, 320, 236, 336) at the wall (250, 350) is the same as the diameter of the fuel channel at the flow restrictor (224, 324)wherein the flow restrictor (224, 324) includes a first portion and a second portion, and wherein the second portion extends axially outwardly from a plane normal to the centerline axis (230, 330) and intersecting the first portion to define a first protrusion (232, 332).

2. The turbine engine (10) of claim 1, wherein the flow restrictor (224, 324) includes a third portion extending axially outwardly from the plane in a second direction, opposite the first direction, to define a second protrusion (236, 336).

3. The turbine engine (10) of claim 2, wherein the fuel injectors (240, 340) are defined by a first segment and a second segment that together define the fuel channel (220, 320, 236, 336), wherein the first segment defines a first fuel channel (220, 320) and the second segment defines a second fuel (F2) channel (236, 336) formed by the first protrusion (232, 332) and the second protrusion (236, 336).

4. The turbine engine (10) of claim 3, wherein an outlet of the first segment includes a first subset of the first set of fuel orifices (222, 322), and an outlet of the second segment includes a second subset, different from the first subset, of the first set of fuel orifices (222, 322).

5. The turbine engine (10) of any of claims 3-4, wherein an inlet of the first segment includes a first subset of the second set of fuel orifices (226, 326), and an inlet of the second segment includes a second subset, different from the first subset, of the second set of fuel orifices (226, 326).

6. The turbine engine (10) of any of claims 3-5, wherein the first segment envelopes at least a portion of the second segment.

7. The turbine engine (10) of any of claims 3-6, wherein the first segment and the second segment are each fluidly coupled to the fuel (F, F1, F2).

8. The turbine engine (10) of any of claims 3-6, wherein the fuel (F, F1, F2) is a first fuel (F1) and the first segment is fluidly coupled to the first fuel (F1) and the second segment is fluidly coupled to a second fuel (F2), different from the first fuel (F1).

## Patentansprüche

1. Turbinentriebwerk (10), umfassend:
eine Kompressorsektion (12), eine Verbrennungssektion (14) und eine Turbinensektion (16) in serieller Durchflussanordnung; und
einen Brenner (80), der innerhalb der Verbrennungssektion (14) bereitgestellt ist, der Brenner umfassend:
eine Domwand und eine Brennerauskleidung, die gemeinsam eine Brennkammer (86) ausbilden, und eine Vielzahl von Treibstoffinjektoren (240, 340), die sich durch einen jeweiligen Abschnitt der Domwand erstreckt, wobei die Treibstoffinjektoren (240, 340) in einer ringförmigen Anordnung bereitgestellt sind, die Treibstoffinjektoren umfassend:
einen Treibstoffkanal (220, 320, 236, 336), wobei der Treibstoffkanal eine Mittellinienachse definiert, an einem distalen Ende endet und mit einem Treibstoff (F, F1, F2) fluidisch gekoppelt ist;
eine Wand (250, 350), die innerhalb des Treibstoffkanals bereitgestellt ist, wobei die Wand einen ersten Satz von Treibstofföffnungen (222, 322) einschließt, der sich dahindurch erstreckt und den Treibstoffkanal (220, 320, 236, 336) mit der Brennkammer (86) fluidisch koppelt; und
einen Durchflussbegrenzer (224, 324), der sich innerhalb des Treibstoffkanals (220, 320, 236, 336), stromaufwärts und beabstandet von dem ersten Satz von Treibstofföffnungen (222, 322) befindet und einen zweiten Satz von Treibstofföffnungen (226, 326) aufweist, der mit dem ersten Satz von Treibstofföffnungen (222, 322) fluidisch gekoppelt ist;
wobei ein Durchmesser des Treibstoffkanals (220, 320, 236, 336) an der Wand (250, 350) derselbe wie der Durchmesser des Treibstoffkanals an dem Durchflussbegrenzer (224, 324) ist, wobei der Durchflussbegrenzer (224, 324) einen ersten Abschnitt und einen zweiten Abschnitt einschließt und wobei sich der zweite Abschnitt von einer Ebene senkrecht zu der Mittellinienachse (230, 330) axial nach außen erstreckt und den ersten Abschnitt schneidet, um einen ersten Vorsprung (232, 332) zu definieren.

2. Turbinentriebwerk (10) nach Anspruch 1, wobei der Durchflussbegrenzer (224, 324) einen dritten Abschnitt einschließt, der sich von der Ebene in eine zweite Richtung, die der ersten Richtung entgegengesetzt ist, axial nach außen erstreckt, um einen zweiten Vorsprung (236, 336) zu definieren.

3. Turbinentriebwerk (10) nach Anspruch 2, wobei die Treibstoffinjektoren (240, 340) über ein erstes Segment und ein zweites Segment definiert sind, die zusammen den Treibstoffkanal (220, 320, 236, 336) definieren, wobei das erste Segment einen Kanal (220, 320) für einen ersten Treibstoff definiert und das zweite Segment einen Kanal (236, 336) für einen zweiten Treibstoff (F2) definiert, die über den ersten Vorsprung (232, 332) und den zweiten Vorsprung (236, 336) ausgebildet werden.

4. Turbinentriebwerk (10) nach Anspruch 3, wobei ein Auslass des ersten Segments einen ersten Teilsatz des ersten Satzes von Treibstofföffnungen (222, 322) einschließt und ein Auslass des zweiten Segments einen zweiten Teilsatz, der sich von dem ersten Teilsatz unterscheidet, des ersten Satzes von Treibstofföffnungen (222, 322) einschließt.

5. Turbinentriebwerk (10) nach einem der Ansprüche 3 bis 4, wobei ein Einlass des ersten Segments einen ersten Teilsatz des zweiten Satzes von Treibstofföffnungen (226, 326) einschließt und ein Einlass des zweiten Segments einen zweiten Teilsatz, der sich von dem ersten Teilsatz unterscheidet, des zweiten Satzes von Treibstofföffnungen (226, 326) einschließt.

6. Turbinentriebwerk (10) nach einem der Ansprüche 3 bis 5, wobei das erste Segment mindestens einen Abschnitt des zweiten Segments umhüllt.

7. Turbinentriebwerk (10) nach einem der Ansprüche 3 bis 6, wobei das erste Segment und das zweite Segment jeweils mit dem Treibstoff (F, F1, F2) fluidisch gekoppelt sind.

8. Turbinentriebwerk (10) nach einem der Ansprüche 3 bis 6, wobei der Treibstoff (F, F1, F2) ein erster Treibstoff (F1) ist und das erste Segment mit dem ersten Treibstoff (F1) fluidisch gekoppelt ist und das zweite Segment mit einem zweiten Treibstoff (F2), der sich von dem ersten Treibstoff (F1) unterscheidet, fluidisch gekoppelt ist.

## Revendications

1. Moteur à turbine (10) comprenant :
une section de compresseur (12), une section de combustion (14) et une section de turbine (16) dans un agencement de flux en série ; et
une chambre de combustion (80), fournie à l'intérieur de la section de combustion (14), la chambre de combustion comprenant :
une paroi de dôme et un revêtement de chambre de combustion formant collectivement une chambre de combustion (86) et une pluralité d'injecteurs de carburant (240, 340) s'étendant à travers une partie respective de la paroi de dôme, les injecteurs de carburant (240, 340) étant fournis dans un agencement annulaire, les injecteurs de carburant comprenant :
un canal de carburant (220, 320, 236, 336), dans lequel le canal de carburant définit un axe central, se termine par une extrémité distale et est relié fluidiquement à un carburant (F, F1, F2) ;
une paroi (250, 350) fournie à l'intérieur du canal de carburant, la paroi comportant une première série d'orifices de carburant (222, 322) s'étendant à travers elle et reliant fluidiquement le canal de carburant (220, 320, 236, 336) à la chambre de combustion (86) ; et
un réducteur de débit (224, 324) situé à l'intérieur du canal de carburant (220, 320, 236, 336), en amont et à distance du premier ensemble d'orifices de carburant (222, 322), et ayant un second ensemble d'orifices de carburant (226, 326) reliés fluidiquement au premier ensemble d'orifices de carburant (222, 322) ;
dans lequel le diamètre du canal de carburant (220, 320, 236, 336) au niveau de la paroi (250, 350) est le même que le diamètre du canal de carburant au niveau du réducteur de débit (224, 324), dans lequel le réducteur de débit (224, 324) comporte une première partie et une seconde partie, et dans lequel la seconde partie s'étend axialement vers l'extérieur à partir d'un plan normal à l'axe central (230, 330) et croise la première partie pour définir une première protubérance (232, 332).

2. Moteur à turbine (10) selon la revendication 1, dans lequel le réducteur de débit (224, 324) comporte une troisième partie s'étendant axialement vers l'extérieur du plan dans une seconde direction, opposée à la première direction, pour définir une seconde protubérance (236, 336).

3. Moteur à turbine (10) selon la revendication 2, dans lequel les injecteurs de carburant (240, 340) sont définis par un premier segment et un second segment qui définissent ensemble le canal de carburant (220, 320, 236, 336), dans lequel le premier segment définit un premier canal de carburant (220, 320) et le second segment définit un second canal de carburant (F2) (236, 336) formé par la première protubérance (232, 332) et la seconde protubérance (236, 336).

4. Moteur à turbine (10) selon la revendication 3, dans lequel une sortie du premier segment comporte un premier sous-ensemble du premier ensemble d'orifices de carburant (222, 322), et une sortie du second segment comporte un second sous-ensemble, différent du premier sous-ensemble, du premier ensemble d'orifices de carburant (222, 322).

5. Moteur à turbine (10) selon l'une quelconque des revendications 3 à 4, dans lequel une entrée du premier segment comporte un premier sous-ensemble du second ensemble d'orifices de carburant (226, 326), et une entrée du second segment comporte un second sous-ensemble, différent du premier sous-ensemble, du second ensemble d'orifices de carburant (226, 326).

6. Moteur à turbine (10) selon l'une quelconque des revendications 3 à 5, dans lequel le premier segment enveloppe au moins une partie du second segment.

7. Moteur à turbine (10) selon l'une quelconque des revendications 3 à 6, dans lequel le premier segment et le second segment sont tous deux reliés fluidiquement au carburant (F, F1, F2).

8. Moteur à turbine (10) selon l'une quelconque des revendications 3 à 6, dans lequel le carburant (F, F1, F2) est un premier carburant (F1) et le premier segment est relié fluidiquement au premier carburant (F1) et le second segment est relié fluidiquement à un second carburant (F2), différent du premier carburant (F1).
